# EUROPEAN PATENT APPLICATION

(11) **EP 4 730 117 A1**
(43) Date of publication of application: **22.04.2026**
(21) Application number: 24902881.2
(22) Date of filing: 12.12.2024
(51) Int. Cl.: G06F 9/4401

(54) **DEVICE WAKE-UP METHOD AND RELATED APPARATUS**

(30) Priority: 14.12.2023 CN 202311724640
(71) Applicant: Huawei Technologies Co., Ltd., Shenzhen, Guangdong 518129 (CN)
(72) Inventor: ZHANG, Baoyun, Shenzhen, Guangdong 518129 (CN); YANG, Heng, Shenzhen, Guangdong 518129 (CN); LUO, Xiongjian, Shenzhen, Guangdong 518129 (CN)
(74) Representative: Pfenning, Meinig & Partner mbB
(86) International application number: PCT/CN2024/138696
(87) International publication number: WO 2025/124464

(57) **Abstract**

This application discloses a device wakeup method and a related apparatus. According to the method, peripherals in an electronic device can be classified into a wakeup-required peripheral and a non-wakeup-required peripheral. When detecting a wakeup operation, the electronic device may wake up the wakeup-required peripheral, resume process scheduling of the wakeup-required peripheral, wake up the non-wakeup-required peripheral, resume process scheduling of the non-wakeup-required peripheral, and after resuming the process scheduling of the wakeup-required peripheral, control a system to enter an operating state. In this way, the electronic device does not need to wait for wakeup of all peripherals to be completed, but needs to wake up only a part of peripherals and resume process scheduling, to perform a subsequent wakeup procedure, so that a quantity of peripherals that need to be woken up before the system enters the operating state is reduced, thereby accelerating a device wakeup speed.

## Description

This application claims priority to Chinese Patent Application No. 202311724640.2, filed with the China National Intellectual Property Administration on December 14, 2023 and entitled "DEVICE WAKEUP METHOD AND RELATED APPARATUS", which is incorporated herein by reference in its entirety.

### TECHNICAL FIELD

This application relates to the field of computer technologies, and in particular, to a device wakeup method and a related apparatus.

### BACKGROUND

Currently, devices such as desktop computers and notebook computers usually include a large quantity of peripherals, for example, keyboards, mice, and displays. During wakeup of a device, it is usually necessary to first wake up a peripheral of the device and resume system scheduling, to control a system to enter an operating state, for example, starting displaying on a display or booting to the desktop. As a result, it needs to take a long time to wake up the device, leading to an excessively long wait time for a user and poor experience.

### SUMMARY

This application provides a device wakeup method and a related apparatus. According to the method, a plurality of peripherals in a system can be woken up simultaneously, and after process scheduling of a part of the peripherals is resumed, the system is controlled to enter an operating state, thereby accelerating a device wakeup speed.

According to a first aspect, an embodiment of this application provides a device wakeup method. The method includes: An electronic device detects a wakeup operation; the electronic device wakes up a first peripheral, resumes process scheduling of the first peripheral, wakes up a second peripheral, and resumes process scheduling of the second peripheral; and after resuming the process scheduling of the first peripheral, the electronic device controls a system to enter an operating state.

According to the method provided in this embodiment of this application, when starting wakeup, the electronic device may simultaneously wake up a plurality of devices. In this way, total duration consumed for waking up all peripherals by the electronic device can be shortened. In addition, after resuming the process scheduling of the first peripheral, the system can be controlled to enter the operating state, thereby accelerating a device wakeup speed.

With reference to the first aspect, in a possible implementation, the system enters the operating state without waiting for resumption of the process scheduling of the second peripheral to be completed.

In other words, the electronic device does not need to complete the resumption of the process scheduling of the second peripheral before the system enters the operating state, so that items that need to be completed before the system enters the operating state are reduced, and a speed at which the system enters the operating state is accelerated, thereby accelerating the device wakeup speed.

With reference to the first aspect, in a possible implementation, the first peripheral includes a peripheral that is required to be woken up for the system to enter the operating state.

The first peripheral may be a wakeup-required peripheral. It can be learned that, after the electronic device starts the wakeup, it may be preferentially ensured that the wakeup-required peripheral is woken up and process scheduling of the wakeup-required peripheral is resumed, to ensure that the system can enter the operating state as soon as possible.

With reference to the first aspect, in a possible implementation, the second peripheral includes a peripheral that is not required to be woken up for the system to enter the operating state.

The second peripheral may be a non-wakeup-required peripheral. It can be learned that, after the electronic device starts the wakeup, it may be preferentially ensured that the wakeup-required peripheral is woken up and the process scheduling of the wakeup-required peripheral is resumed. It does not need to be limited that resumption of the process scheduling of the non-wakeup-required peripheral needs to be completed before the system enters the operating state, to decouple, from a main system wakeup procedure, waking up the non-wakeup-required peripheral by the system.

With reference to the first aspect, in a possible implementation, that the electronic device controls the system to enter the operating state specifically includes: The electronic device lights up a screen, displays a system account login interface, or displays a user interface present before hibernation or sleep.

It can be learned that, after the wakeup of the first peripheral and the resumption of the process scheduling of the first peripheral are completed, the electronic device may light up the screen, display the system account login interface, or display the user interface present before hibernation or sleep, so that the device wakeup speed is accelerated from a perspective of user perception.

With reference to the first aspect, in a possible implementation, the first peripheral includes one or more of the following: a clock, a power management unit PMU, a direct memory access DMA controller, an inter-processor communication IPC module, a system memory management unit SMMU, an input/output microcontroller unit IOMCU, a general purpose input/output GPIO controller, a high-speed serial computer expansion bus standard PCIe controller, a universal flash storage UFS controller, a graphics processing unit GPU, a data processing unit DPU, and a display.

With reference to the first aspect, in a possible implementation, the second peripheral includes one or more of the following: a universal serial bus USB controller, a universal serial bus USB hub, a keyboard, a mouse, a memory, a network interface card, a Wi-Fi chip, a Bluetooth chip, and a camera.

With reference to the first aspect, in a possible implementation, the first peripheral includes a first sub-peripheral, wakeup of the first sub-peripheral depends on wakeup of a second sub-peripheral, and the second sub-peripheral belongs to the first peripheral or the second peripheral. That the electronic device wakes up the first peripheral includes: The electronic device wakes up the first sub-peripheral after waking up the second sub-peripheral.

It can be learned that, if the wakeup-required peripheral includes a peripheral that depends on wakeup of another peripheral, when the peripheral is woken up, the another peripheral on which the peripheral depends may be preferentially ensured to be woken up first, to ensure that the wakeup-required peripheral is successfully woken up.

With reference to the first aspect, in a possible implementation, the first peripheral includes a third sub-peripheral, the second peripheral includes a fourth sub-peripheral, and wakeup of the fourth sub-peripheral depends on wakeup of the third sub-peripheral. That the electronic device wakes up the second peripheral specifically includes: The electronic device wakes up the fourth sub-peripheral after waking up the third sub-peripheral.

It can be learned that, if the wakeup-required peripheral and the non-wakeup-required peripheral include peripherals that depend on each other for wakeup, and the peripheral included in the non-wakeup-required peripheral depends on the peripheral included in the wakeup-required peripheral, the electronic device may wake up the wakeup-dependent peripheral in the non-wakeup-required peripheral after waking up the depended peripheral in the wakeup-required peripheral. In addition, because the electronic device does not need to wait for the non-wakeup-required peripheral to be woken up, even if the non-wakeup-required peripheral and the wakeup-required peripheral include the peripherals that depend on each other for wakeup, the electronic device does not need to wait for wakeup of all devices that depend on each other to be completed, so that a wakeup dependency relationship between peripherals that support synchronous wakeup is weakened, and a time spent by the electronic device 100 on entering the operating state is effectively shortened.

With reference to the first aspect, in a possible implementation, the second peripheral includes a fifth sub-peripheral and a sixth sub-peripheral, and wakeup of the sixth sub-peripheral depends on wakeup of the fifth sub-peripheral. That the electronic device wakes up the second peripheral specifically includes: The electronic device first wakes up the fifth sub-peripheral, and then wakes up the sixth sub-peripheral.

In other words, if the non-wakeup-required peripheral includes peripherals that depend on each other for wakeup, even if these peripherals that depend on each other can be woken up only one by one in serial, the electronic device does not need to wait for a serial wakeup process of the peripherals. Instead, only after the process scheduling of the wakeup-required peripheral is resumed, the system may be made to enter the operating state.

With reference to the first aspect, in a possible implementation, that the electronic device wakes up the second peripheral specifically includes: The electronic device wakes up a plurality of peripherals in the second peripheral in parallel.

It can be learned that the electronic device may wake up a plurality of peripherals in the non-wakeup-required peripheral in parallel, to accelerate a peripheral wakeup speed.

With reference to the first aspect, in a possible implementation, a wakeup ranking of each peripheral in the second peripheral is determined by the electronic device based on a use frequency of the peripheral by a user. A peripheral that is used more frequently by the user is woken up earlier.

This can be ensured as much as possible that a peripheral with a high user frequency can be preferentially woken up, and even if the electronic device does not wake up all the peripherals, it can be ensured as much as possible that the user normally uses the electronic device 100.

With reference to the first aspect, in a possible implementation, that the electronic device wakes up the first peripheral specifically includes: The electronic device wakes up the first peripheral by using a main thread. That the electronic device wakes up the second peripheral specifically includes: The electronic device wakes up the second peripheral by using an asynchronous thread.

The asynchronous thread is another thread different from the main thread. The asynchronous thread is a new thread separately created by a kernel, and is specially used to process an asynchronous transaction. The asynchronous thread is at a same level as the main thread, and may be run simultaneously with the main thread. The asynchronous thread does not block running of the main thread, so that the electronic device can preferentially ensure wakeup of the first peripheral.

With reference to the first aspect, in a possible implementation, the first peripheral is determined by the electronic device according to an allowlist, and a plurality of peripheral types that belong to the first peripheral are preset in the allowlist.

In this way, the electronic device can classify the peripherals according to the allowlist, and quickly obtain the wakeup-required peripheral and the non-wakeup-required peripheral through classification. In addition, a developer may further modify the allowlist again later, to implement flexible classification of the non-wakeup-required peripheral and the wakeup-required peripheral in the electronic device, and dynamically adjust peripherals included in the non-wakeup-required peripheral and the wakeup-required peripheral.

With reference to the first aspect, in a possible implementation, the electronic device is a tablet computer, a notebook computer, or a desktop computer.

According to a second aspect, an embodiment of this application provides an electronic device, including a memory, one or more processors, and one or more programs. When the one or more processors execute the one or more programs, the electronic device is enabled to implement the method according to any one of the first aspect or the implementations of the first aspect.

According to a third aspect, an embodiment of this application provides a computer-readable storage medium, including a computer program. The computer program includes instructions, and is a set of the instructions. When the computer program is run on an electronic device, the electronic device is enabled to perform the method according to any one of the first aspect or the implementations of the first aspect.

According to a fourth aspect, an embodiment of this application provides a computer program product. When the computer program product runs on a computer, the computer is enabled to perform the method according to any one of the first aspect or the implementations of the first aspect.

### BRIEF DESCRIPTION OF DRAWINGS

FIG. 1 is a diagram of wakeup sequences in a device wakeup method according to an embodiment of this application and another technology;
FIG. 2 is a diagram of a hardware structure of an electronic device 100 according to an embodiment of this application;
FIG. 3 is a diagram of a system architecture of an electronic device 100 according to an embodiment of this application;
FIG. 4A to FIG. 4D are diagrams of application scenarios of a device wakeup method according to an embodiment of this application;
FIG. 5 is an overall schematic flowchart of a device wakeup method according to an embodiment of this application; and
FIG. 6 is a schematic flowchart of a device wakeup method according to an embodiment of this application.

### DESCRIPTION OF EMBODIMENTS

The following clearly and completely describes the technical solutions according to embodiments of this application with reference to accompanying drawings. In descriptions of embodiments of this application, unless otherwise stated, "/" indicates "or". For example, A/B may indicate A or B. The term "and/or" in this specification merely describes an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

The term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of graphical user interface (graphical user interface, GUI), and is a user interface that is displayed in a graphical manner and that is related to a computer operation. The user interface may be a visual interface element, for example, a text, an icon, a button, a menu, a tab, a text box, a dialog box, a status bar, a navigation bar, or a widget, that is displayed on a display of the electronic device.

To accelerate a device wakeup speed, in an asynchronous wakeup manner, peripherals are classified into a peripheral that supports asynchronous wakeup and a peripheral that supports synchronous wakeup. When an electronic device triggers wakeup, a procedure of waking up the peripheral that does not support the asynchronous wakeup may be performed in a main thread, and a procedure of waking up the peripheral that supports the asynchronous wakeup may be performed in an asynchronous thread. Then, after the peripheral that does not support the asynchronous wakeup is woken up, the main thread waits for the peripheral that supports the asynchronous wakeup to be woken up, and after wakeup of all peripherals are completed, performs subsequent procedures such as unfreezing a kernel thread, a work queue, a user-mode process, and the like of the peripheral, lighting up a screen of a display, and displaying a user interface.

The asynchronous wakeup is relative to the synchronous wakeup. The synchronous wakeup means that devices are woken up one by one in serial, and the asynchronous wakeup means that devices may be woken up in parallel. The peripheral that supports the asynchronous wakeup may be a peripheral that does not have a dependency relationship with another peripheral and that can be woken up without waiting for the another peripheral to be woken up, for example, a high-speed serial computer expansion bus standard (peripheral component interconnect express, PCIe) network interface card, a universal serial bus (universal serial bus, USB) controller, a USB keyboard, a USB mouse, and a display. The peripheral that supports the synchronous wakeup may be a peripheral that has a dependency relationship with another peripheral and that can be woken up after waiting for the another peripheral to be woken up, for example, an integrated circuit (inter-integrated circuit, I2C) controller and a universal asynchronous receiver/transmitter (universal asynchronous receiver/transmitter, UART) controller.

It can be learned that, in comparison with wakeup without distinguishing between peripherals, classifying the peripherals into the peripheral that supports the asynchronous wakeup and the peripheral that does not support the asynchronous sleep wakeup and separately waking up the two types of devices can accelerate the device wakeup speed to some extent, but has a small benefit. The electronic device still needs to wait for all the peripherals to be woken up, and then can perform the subsequent wakeup procedure, for example, resuming process scheduling of the peripheral, lighting up the screen, and displaying the system account login interface, and duration in which the user waits for the device to be woken up is not significantly shortened.

An embodiment of this application provides a device wakeup method. According to the method, peripherals in an electronic device can be classified into a wakeup-required peripheral and a non-wakeup-required peripheral. When triggering wakeup, the electronic device may wake up the wakeup-required peripheral, resume process scheduling of the wakeup-required peripheral, wake up the non-wakeup-required peripheral, resume process scheduling of the non-wakeup-required peripheral, and after resuming the process scheduling of the wakeup-required peripheral, make a system enter an operating state.

That the system enters the operating state may include any one of the following: lighting up a screen of a display, displaying a system account login interface, displaying a user interface present before hibernation or sleep, and the like.

In this way, the electronic device may wake up a plurality of devices at the same time after the wakeup is triggered, so that total duration consumed for waking up all the peripherals by the electronic device is shortened, and there is no need to place the system into the operating state after waiting for the wakeup of all the peripherals to be completed and process scheduling to be resumed. Instead, after the process scheduling of the wakeup-required peripheral is resumed, the system may be placed into the operating state, so that items that need to be completed before the system enters the operating state are reduced, thereby accelerating a device wakeup speed.

The peripheral, namely, an auxiliary device, is a device outside an integrated circuit chip, and the peripheral device may be connected to the integrated circuit chip through a dedicated circuit and bus.

Based on a position relationship between the device and the integrated circuit chip, the peripheral may include an on-chip peripheral and an off-chip peripheral. The on-chip peripheral is a device that is integrated on the integrated circuit chip but does not belong to the chip, for example, a universal flash storage (universal flash storage, UFS) controller, a data processing unit (data processing unit, DPU), a graphics processing unit (graphics processing unit, GPU), or a clock. The off-chip peripheral may be a device that is not located on the integrated circuit chip but is externally connected to the integrated circuit chip, for example, a keyboard, a mouse, a display, a USB flash drive, a network interface card, or a camera.

The wakeup-required peripheral includes a peripheral that is required to be woken up in a system wakeup process, and the non-wakeup-required peripheral includes a peripheral that is not required to be woken up in the system wakeup process. A peripheral that is required for system wakeup is a peripheral that affects the system to enter the operating state. If the peripheral is not in an operating state, the system cannot enter the operating state. A peripheral that is not required for system wakeup is a peripheral that does not affect the system to enter the operating state. If the peripheral is not in an operating state, the system can still enter the operating state. In this way, during wakeup, the electronic device can preferentially ensure that wakeup of the device that is required for the system wakeup is completed, to ensure normal execution of the system wakeup, and accelerate a system wakeup speed.

Before the electronic device is woken up, the electronic device is in a sleep or hibernation state. In this case, a peripheral in the electronic device is in a suspended state.

In the sleep state, a central processing unit (central processing unit, CPU) in the electronic device stops executing an instruction, and data in a memory is stored in the memory. In the hibernation state, the CPU in the electronic device stops executing the instruction, and data generated in an original operating state is written into a hard disk. After the electronic device switches to the operating state (woken up), the data written into the hard disk may be stored in the memory without change, and the system resumes running.

For example, the electronic device may detect a wakeup operation initiated by a user, and start device wakeup. For example, the electronic device may detect a click operation performed on a power button, and start device wakeup. For a specific manner in which the electronic device starts wakeup, refer to a subsequent method embodiment. Details are not described herein.

After the electronic device starts the wakeup, the system may continue execution from the instruction on which execution is stopped in the hibernation or sleep state last time, and start a wakeup procedure, which includes: enabling the CPU, waking up the on-chip peripheral and the off-chip peripheral, resuming a kernel thread, a work queue, process scheduling, and the like, and displaying a subsystem and then starting a display procedure. The system sends display data to the display by using a display driver and lights up the display, and then displays the system account login interface. After the user is authenticated, the desktop is displayed, so that the user may normally use the system, to complete wakeup of the electronic device.

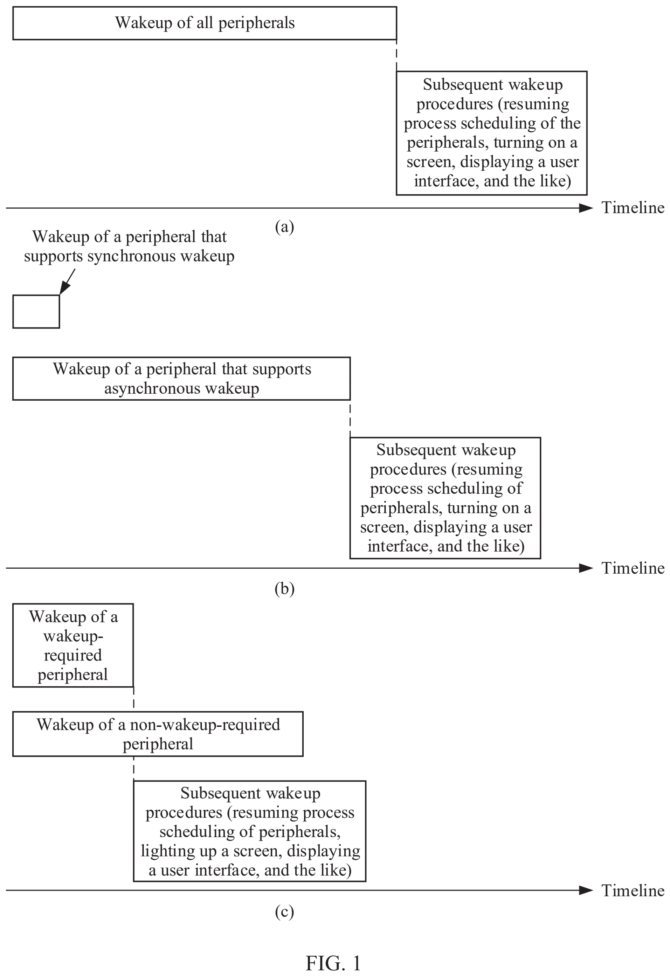

To better understand a difference between this solution and another technology, FIG. 1 is a diagram of wakeup sequences in a device wakeup method according to an embodiment of this application and another technology.

(a) in FIG. 1 is a diagram of a wakeup sequence of peripherals that are not distinguished. (b) in FIG. 1 is a diagram of a wakeup sequence in which peripherals are classified into a peripheral that supports synchronous wakeup and a peripheral that supports asynchronous wakeup and wakeup is performed. (c) in FIG. 1 is a diagram of a wakeup sequence in the device wakeup method according to an embodiment of this application.

It can be learned from FIG. 1 that, if the peripherals are woken up based on the wakeup sequence in (a), an electronic device can only wake up each peripheral stepwise, and a subsequent wakeup procedure can be executed only after wakeup of all the peripherals are completed, resulting in excessively long device wakeup duration. If the peripherals are woken up based on the wakeup sequence in (b), an electronic device can simultaneously wake up the peripheral that supports the synchronous wakeup and the peripheral that supports the asynchronous wakeup, but the electronic device still needs to wait for wakeup of all the peripherals to be completed, and then can perform a subsequent wakeup procedure. In addition, a quantity of peripherals that support the asynchronous wakeup is far greater than a quantity of peripherals that support the synchronous wakeup, resulting in limited improvement in device wakeup duration. If peripherals are woken up based on the wakeup sequence in (c), an electronic device may simultaneously wake up a wakeup-required peripheral and a non-wakeup-required peripheral, and also does not need to wait for all the peripherals to be woken up and then start a subsequent wakeup procedure, thereby greatly shortening device wakeup duration.

Performing the subsequent wakeup procedure may include: after waking up the peripheral, resuming process scheduling of the peripheral, for example, unfreezing a kernel thread, a work queue, a user-mode process, and the like of the peripheral, and lighting up a screen of a display, displaying a user interface, and the like.

In conclusion, according to the device wakeup method provided in embodiments of this application, a plurality of peripherals may be woken up in parallel, so that a time consumed for waking up the peripherals is shortened. In addition, the electronic device does not need to wait for wakeup of all the peripherals to be completed or process scheduling of all the peripherals to be resumed, accelerating a system wakeup speed.

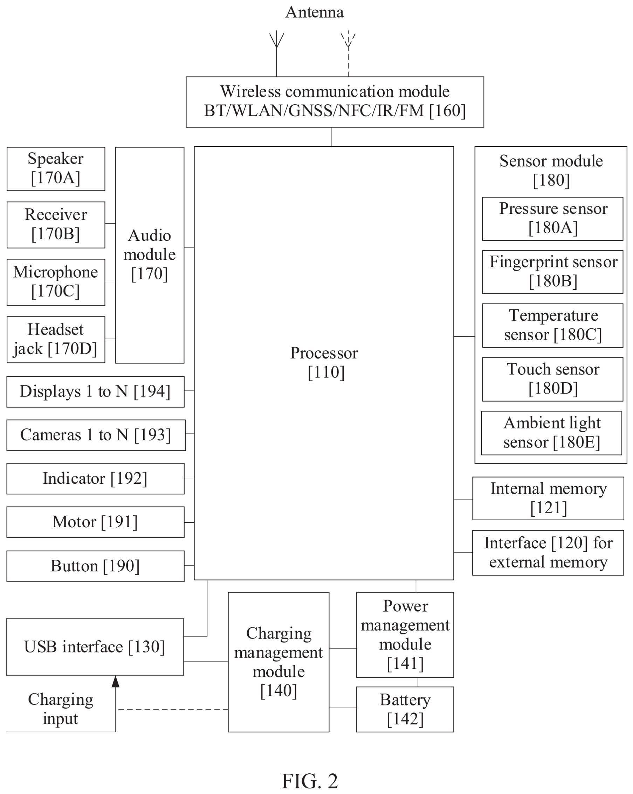

**FIG. 2** **is a diagram of a hardware structure of an electronic device 100 according to an embodiment of this application.**

As shown in FIG. 2, the electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, a mixed reality (mixed reality, MR) device, an artificial intelligence (artificial intelligence, AI) device, a wearable device, a vehicle-mounted device, a smart home device, and/or a smart city device. A specific type of the electronic device 100 is not specially limited in embodiments of this application.

Optionally, in some embodiments of this application, the electronic device 100 may be the desktop computer, the laptop computer, the handheld computer, the notebook computer, or the like.

As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna, a wireless communication module 160, an audio module 170, a speaker 170A, a receiver 170B, a microphone 170C, a headset jack 170D, a sensor module 180, a button 190, a motor 191, an indicator 192, a camera 193, a display 194, and the like. The sensor module 180 may include but is not limited to a pressure sensor 180A, a fingerprint sensor 180B, a temperature sensor 180C, a touch sensor 180D, an ambient light sensor 180E, and the like.

It may be understood that the structure shown in this embodiment does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

**The processor 110** may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

**In some implementations, the processor 110 may be configured to trigger device wakeup when detecting a wakeup operation of a user, which may specifically include waking up a peripheral included in the electronic device 100 and resuming process scheduling of the peripheral. In addition, the processor 110 may be configured to: classify the peripheral in the electronic device 100 into a wakeup-required peripheral and a non-wakeup-required peripheral, and after waking up the wakeup-required peripheral and resuming process scheduling, light up a screen of the electronic device 100.**

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

**In some implementations, the electronic device 100 may identify, through the one or more interfaces in the processor 110, one or more peripherals connected to the electronic device 100.**

A wireless communication function of the electronic device 100 may be implemented through the antenna, the wireless communication module 160, the modem processor, the baseband processor, and the like.

The electronic device 100 may implement a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, which execute program instructions to generate or change display information.

**The display 194** is configured to display an image, a video, and the like. In some embodiments, the electronic device 100 may include one or N displays 194, where N is a positive integer greater than 1.

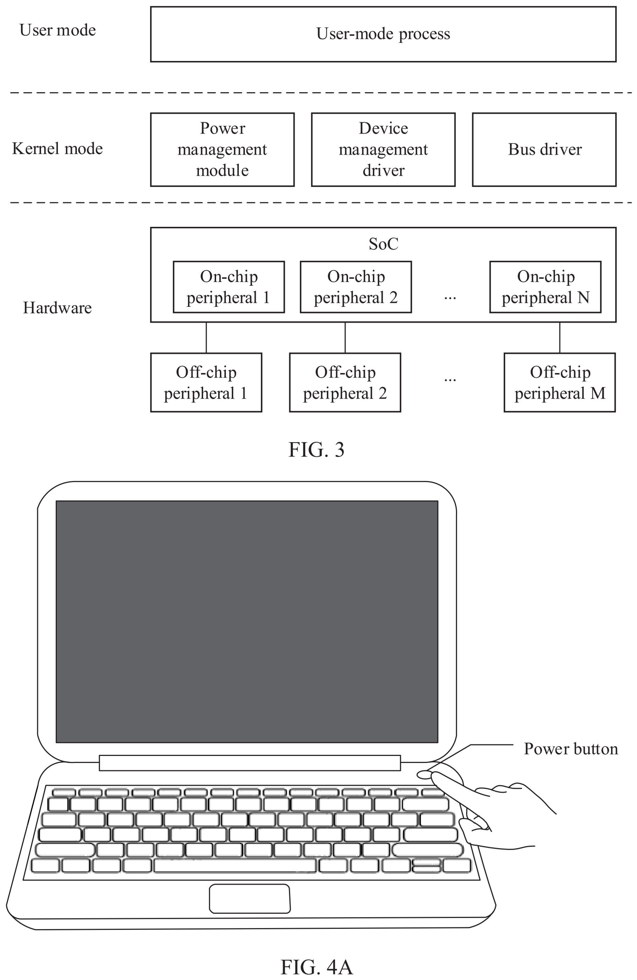

**In some implementations, the display 194 may be configured to: light up a screen after the wakeup-required peripheral is woken up and the process scheduling is resumed; display a system account login interface after the screen is turned on; and after the user logs in to a specific system account on the login interface, display the desktop or a user interface displayed before the electronic device 100 hibernates or sleeps. For specific content displayed by the display 194 after the electronic device 100 is woken up, refer to subsequent descriptions about** **FIG. 4A to FIG. 4D****. Details are not described herein.**

The electronic device 100 may implement a photographing function through the ISP, the camera 193, the video codec, the GPU, the display 194, the application processor, and the like.

**The internal memory 121** may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound play function or an image play function), and the like. The data storage area may store data (for example, audio data and a phone book) created during use of the electronic device 100, and the like. In addition, the internal memory 121 may include a high-speed random access memory, and may further include a non-volatile memory, for example, at least one magnetic disk storage device, a flash memory, or a universal flash storage (universal flash storage, UFS).

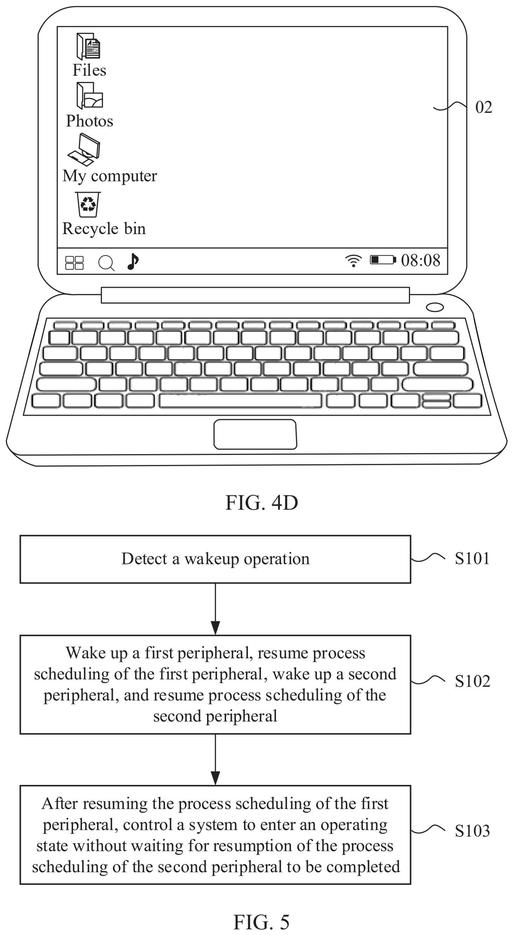

**In some embodiments, the internal memory 121 may be configured to store an allowlist. A device type that belongs to the wakeup-required peripheral and/or the non-wakeup-required peripheral may be preset in the allowlist. The electronic device 100 may classify the peripheral in the electronic device 100 into the non-wakeup-required peripheral and the wakeup-required peripheral based on the allowlist. For specific descriptions of the allowlist, refer to subsequent related content in** **FIG. 3** **and** **FIG. 5****. Details are not described herein.**

The electronic device 100 may implement an audio function, for example, music playing or recording, through the audio module 170, the speaker 170A, the receiver 170B, the microphone 170C, the headset jack 170D, the application processor, and the like.

The foregoing embodiments are merely intended for describing the technical solutions of this application rather than limiting this application. Although this application is described in detail with reference to the foregoing embodiments, a person of ordinary skill in the art should understand that modifications may still be made to the technical solutions described in the foregoing embodiments or equivalent replacements may still be made to a part of technical features thereof, without departing from the scope of the technical solutions of embodiments of this application.

**FIG. 3** **is a diagram of a system architecture of an electronic device 100 according to an embodiment of this application.**

The electronic device 100 may be a portable terminal device carrying Harmony, iOS, Android, Microsoft, Linux, or another operating system, for example, a mobile phone, a tablet computer, or a wearable device; or may be a non-portable terminal device, for example, a laptop (Laptop) computer having a touch-sensitive surface or a touch panel, or a desktop computer having a touch-sensitive surface or a touch panel. In this embodiment of this application, a Linux operating system is used as an example to describe the system architecture of the electronic device 100.

A user mode and a kernel mode may be two running levels of the Linux operating system. When a program runs at a level-3 privilege level, the program may be referred to as running in the user mode. When a program runs at a level-0 privilege level, the program may be referred to as running in the kernel mode. In other words, the user mode may be a form of a resource that can be operated by a user, and the kernel mode may be a form of a resource that can be operated by a system kernel. A basic unit, namely, a process, for program execution runs in the user mode. One process has a plurality of threads. The user mode correspondingly uses a user thread, and the kernel mode correspondingly uses a kernel thread.

As shown in FIG. 3, a user-mode process runs in the user mode, and the kernel mode may include **modules such as a power management module, a device management driver, and a bus driver.**

The power management module is configured to control device wakeup, which specifically includes: separately waking up a wakeup-required peripheral and a non-wakeup-required peripheral in the electronic device 100, and performing a subsequent wakeup procedure after wakeup of the wakeup-required peripheral is completed. In addition, the power management module may establish and maintain a device linked list. The device linked list may be used to record the wakeup-required peripheral and/or the non-wakeup-required peripheral in the electronic device 100. In this way, the power management module may implement parallel wakeup of different types of peripherals based on the device linked list.

An allowlist may be preset in the device management driver. The electronic device 100 may classify, according to the allowlist, a non-wakeup-required peripheral and a wakeup-required peripheral in the electronic device 100.

The bus driver may be configured to identify all peripherals in the electronic device 100, including a pluggable peripheral and a non-pluggable peripheral. The pluggable peripheral is a peripheral that can be manually disconnected from and connected to a body part of the electronic device 100 by a user, for example, a USB flash drive, a mouse, or a keyboard. Correspondingly, the non-pluggable peripheral may be a peripheral that cannot be manually disconnected from or connected to the body part of the electronic device 100 by the user. In addition, the bus driver may further update, in real time based on connection and disconnection of the peripheral, the peripheral identified in the electronic device 100. The pluggable peripheral is used as an example. When the pluggable peripheral is connected to the body part of the electronic device 100, the bus driver may identify access of the peripheral, read device information of the peripheral, and invoke a device adding interface to register the peripheral to the device linked list maintained by the power management module. If the peripheral is disconnected from the body part of the electronic device 100, the bus driver may identify disconnection of the peripheral, and delete the peripheral from the device linked list.

During specific implementation, the bus driver may identify all peripherals connected to the electronic device 100, and register all currently connected peripherals with the device linked list. The device management driver may classify, based on the allowlist, the peripherals registered in the device linked list, for example, add different labels to a peripheral that belongs to the wakeup-required peripheral and a peripheral that belongs to the non-wakeup-required peripheral, so that the power management module can separately wake up the wakeup-required peripheral and the non-wakeup-required peripheral in the electronic device 100.

For example, the allowlist may be a list preset in the electronic device 100 in advance by a developer. The allowlist may list various devices that belong to the wakeup-required device and/or various devices that belong to the non-wakeup-required device.

In addition, hardware in the electronic device 100 may include a system on chip (system on chip, SoC). Peripherals integrated inside the SoC may include an on-chip peripheral 1, an on-chip peripheral 2, ..., and an on-chip peripheral N, and peripherals located outside the SoC may include an off-chip peripheral 1, an off-chip peripheral 2, ..., and an off-chip peripheral M.

For specific descriptions of the on-chip peripheral and the off-chip peripheral, refer to the foregoing content. Details are not described herein again. It may be understood that FIG. 3 merely describes an example of the system architecture of the electronic device 100. In another embodiment, the electronic device 100 may further include more or fewer software and hardware structures. This is not limited in embodiments of this application.

**The following uses an example in which an electronic device 100 is a notebook computer, to describe an application scenario of a device wakeup method in an embodiment of this application by using** **FIG. 4A to FIG. 4D****.**

FIG. 4A is a diagram of an electronic device 100 in a hibernation or sleep state.

As shown in FIG. 4A, when the electronic device 100 is in the hibernation or sleep state, a display of the electronic device 100 is in a screen-off state. When the electronic device 100 detects a user operation, for example, a click operation, performed on a power button, the electronic device 100 may start device wakeup in response to the operation. The device wakeup may include waking up a peripheral included in the electronic device 100, resuming process scheduling of a system, displaying a user interface on the display after a screen of the display is turned on, and the like.

It may be understood that, in addition to triggering wakeup of the electronic device 100 by using the power button of the electronic device 100, the electronic device 100 may be woken up in another manner. For example, the electronic device 100 may detect a wakeup operation performed on a mouse or a keyboard, and start wakeup of the electronic device 100. For a specific manner in which the electronic device 100 starts wakeup, refer to a subsequent embodiment. Details are not described herein.

In a wakeup process, the electronic device 100 may classify peripherals into a wakeup-required peripheral and a non-wakeup-required peripheral, start wakeup of the wakeup-required peripheral and the non-wakeup-required peripheral, resume process scheduling of the wakeup-required peripheral after wakeup of the wakeup-required peripheral is completed, and make the system enter an operating state, for example, lighting up a screen of the electronic device 100 after resuming the process scheduling of the wakeup-required peripheral.

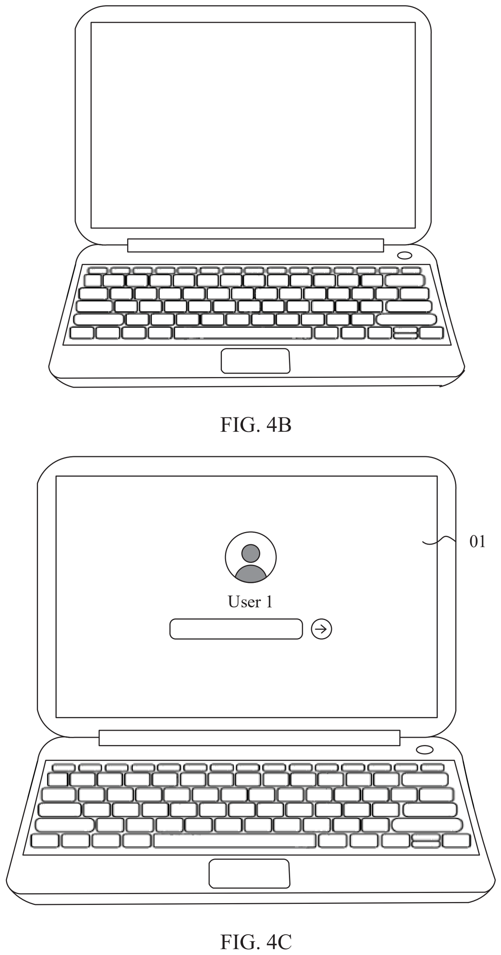

FIG. 4B is a diagram of lighting up a screen in a wakeup process of an electronic device 100.

Further, after a screen of the electronic device 100 is turned on, the electronic device 100 may continue to wake up a non-wakeup-required peripheral that has not completed wakeup and resume process scheduling of the non-wakeup-required peripheral.

For example, after the screen of the electronic device 100 is turned on, the electronic device 100 may display a login interface 01 shown in FIG. 4C. A system account login interface displayed before the electronic device 100 enters the desktop may be displayed on the login interface 01, and a user may enter an account and a password or select an account to log in on the login interface, so that the electronic device 100 controls user permission, records a user behavior, protect operation security, and the like by using the logged-in account in an operating process.

In some implementations, before displaying the login interface 01 shown in FIG. 4C, the electronic device 100 may complete wakeup of the non-wakeup-required peripheral and resume the process scheduling of the non-wakeup-required peripheral. In this way, before entering the desktop, the electronic device 100 may complete all preparation for waking up the peripheral, to ensure that the user can normally use the electronic device 100.

For example, after the electronic device 100 completes account login through the login interface 01 shown in FIG. 4C, the electronic device 100 may restore to a user interface displayed before hibernation or sleep, for example, a desktop home screen 02 shown in FIG. 4D.

In some other implementations, after displaying the login interface 01 shown in FIG. 4C and before displaying the desktop home screen 02 shown in FIG. 4D, the electronic device 100 may complete the wakeup of the non-wakeup-required peripheral, and resume the process scheduling of the non-wakeup-required peripheral. In this way, all the preparation for waking up the peripheral can be completed in addition to formally starting to use the electronic device 100 by the user, to ensure that the user normally uses the electronic device 100. In addition, a speed of displaying the login interface by the electronic device 100 can be further accelerated, thereby further accelerating a device wakeup speed from a perspective of user perception.

It may be understood that, in addition to completing wakeup of all peripherals and resuming process scheduling of all the peripherals by the electronic device 100 before displaying the login interface 01 shown in FIG. 4C, and before displaying the user interface present before hibernation or sleep, for example, the desktop home screen 02 shown in FIG. 4D, the electronic device 100 may wake up a part of non-wakeup-required peripherals in the electronic device 100 at another point. For example, it is assumed that a camera is the non-wakeup-required peripheral. Because the user does not use the camera when there is no photographing requirement, the electronic device 100 does not need to wake up the camera when detecting a wakeup operation of the user, but wakes up the camera when the user has a requirement for using the camera. An occasion for waking up the non-wakeup-required peripheral is not limited in embodiments of this application.

It may be understood that FIG. 4A to FIG. 4D are merely for ease of understanding this solution, and do not constitute a limitation on this solution.

**FIG. 5** **is an overall schematic flowchart of a device wakeup method according to an embodiment of this application.**

As shown in FIG. 5, the device wakeup method provided in this embodiment of this application may include but is not limited to the following steps.

**S101:** An electronic device 100 detects a wakeup operation.

The wakeup operation may be used to trigger device wakeup, and switch the electronic device 100 from a hibernation or sleep state to an operating state.

Before the electronic device 100 detects the wakeup operation, all peripherals in the electronic device 100 are in a suspended state. After the electronic device 100 detects the wakeup operation, the electronic device 100 may wake up the peripheral, and switch the peripheral from the suspended state to the operating state.

Placing the peripheral into the suspended state means suspending operation of the peripheral, and placing the peripheral into the hibernation state, for example, stopping a task in a work queue, disabling an interrupt, disabling a clock, making the peripheral enter a low-power state, or the like in a device driver. Correspondingly, waking up the peripheral and switching the peripheral from the suspended state to the operating state means resuming operation of the peripheral, for example, resuming the peripheral from the low-power state, enabling the clock, reinitializing a register, resuming the task in the work queue, or the like in the device driver. In addition, when the peripheral enters the suspended state or the peripheral is woken up, the device driver of the peripheral may transmit data through a physical connection channel, for example, a PCIe channel, a USB channel, an I2C channel, or a serial peripheral interface (serial peripheral interface, SPI) channel.

For example, there may be the following plurality of cases for the wakeup operation.
(1) The wakeup operation may be a wakeup operation performed by a user on a wakeup source, for example, a mouse, a keyboard, or a power button.

When the user performs the wakeup operation, for example, a click operation, performed on the wakeup source, for example, the mouse, the keyboard, or the power button, the electronic device 100 may obtain a wakeup instruction generated by the electronic device 100 in response to the wakeup operation, to trigger the device wakeup.

(2) The wakeup operation may be an operation of inserting or removing a USB flash drive by a user.

For example, when the USB flash drive is inserted into a USB interface of the electronic device 100, the electronic device 100 may generate a wakeup instruction, to trigger the device wakeup.

(3) If the electronic device 100 is a notebook computer, the wakeup operation may be an operation of opening a lid of the notebook computer by a user.

It may be understood that the wakeup operation is not limited in embodiments of this application. In addition, in addition to the wakeup operation that can be initiated by the user to wake up the electronic device 100, wakeup of the electronic device 100 may be triggered in another manner. For example, if a scheduled task or a scheduled wakeup event is set in the electronic device 100, the electronic device 100 may generate a wakeup instruction at a time point set by the electronic device 100 to trigger the device wakeup. For another example, another device may also send a wakeup instruction to the electronic device 100 via a network, to remotely control the wakeup of the electronic device 100. A manner of waking up the electronic device 100 is not limited in embodiments of this application.

**S102:** The electronic device 100 wakes up a first peripheral, resumes process scheduling of the first peripheral, wakes up a second peripheral, and resumes process scheduling of the second peripheral.

Before entering the hibernation or sleep state, the electronic device 100 may back up data in the peripheral in the electronic device 100, so that the peripheral enters the suspended state. Therefore, waking up the peripheral may include: before the electronic device 100 enters the hibernation or sleep state, rewriting the data backed up in the peripheral into the peripheral.

In other words, waking up the first peripheral may include: before the electronic device 100 enters the hibernation or sleep state, rewriting data backed up in the first peripheral into the first peripheral; and waking up the second peripheral may include: before the electronic device 100 enters the hibernation or sleep state, rewriting data backed up in the second peripheral into the second peripheral.

Before entering the hibernation or sleep state, the electronic device 100 may traverse all work tasks such as kernel threads, work queues, and user-mode processes in a system, and freeze all work tasks that can be frozen. Therefore, after the peripheral is woken up, process scheduling of the peripheral further needs to be resumed, that is, a frozen work task of the peripheral is unfrozen.

Freezing may mean that the system sets the user-mode process, the kernel thread, and the like to a controllable "suspended" state. The kernel thread, work queue, and user-mode process on which the peripheral depends are unfrozen, so that the kernel thread, work queue, and user-mode process can enter an operating state, and access of the system to the peripheral can be resumed. The kernel thread, work queue, and user-mode process on which the peripheral depends may be a kernel thread, a work queue, and a user-mode process that have accessed the peripheral before the electronic device 100 enters the hibernation or sleep state.

In other words, resuming the process scheduling of the first peripheral may include unfreezing a kernel thread, a work queue, and a user-mode process on which the first peripheral depends, and resuming the process scheduling of the second peripheral may include unfreezing a kernel thread, a work queue, and a user-mode process on which the second peripheral depends.

The first peripheral may be the wakeup-required peripheral mentioned above, and the wakeup-required peripheral may be a peripheral that is required to be woken up for the system to enter an operating state. In other words, participation of the peripheral is required for the system of the electronic device 100 to enter the operating state. If the peripheral is in a suspended state or an off state, the system cannot enter the operating state.

For example, the first peripheral may include any one or more of the following: the clock, a PMU, a direct memory access (direct memory access, DMA) controller, an inter-processor communication (Inter-processor communication, IPC) module, a system memory management unit (system memory management unit, SMMU), an input/output microcontroller unit (input/output microcontroller unit, IOMCU), a general purpose input/output (general purpose input/output, GPIO) controller, a PCIe controller, a UFS controller, a DPU, a GPU, a display, and the like.

In some implementations, to accelerate a speed at which the electronic device 100 wakes up the first peripheral, the electronic device 100 may wake up a plurality of devices in the first peripheral in parallel.

The second peripheral may be the non-wakeup-required peripheral mentioned above, and the wakeup-required peripheral may be a peripheral that is not required to be woken up for the system to enter the operating state. In other words, participation of the peripheral is not required for the system of the electronic device 100 to enter the operating state. Even if the peripheral is in a suspended state or an off state, the system can still enter the operating state.

For example, the second peripheral may include any one or more of the following: a USB controller, the keyboard, the mouse, the USB flash drive, a network interface card, a camera, a USB hub, a Wi-Fi chip, and a Bluetooth chip.

For example, the electronic device 100 may wake up the second peripheral while waking up the first peripheral, so that the electronic device 100 wakes up a plurality of peripherals in parallel, thereby accelerating a device wakeup speed.

In an implementation, the electronic device 100 may simultaneously wake up the first peripheral and the second peripheral in a multi-thread wakeup manner. For example, the electronic device 100 may wake up the first peripheral by using a **main thread,** and wake up the second peripheral by using an asynchronous thread. The main thread is a thread that is started by default after a program runs. The asynchronous thread is another thread different from the main thread. The asynchronous thread is a new thread separately created by a kernel, and is specially used to process an asynchronous transaction. The asynchronous thread is at a same level as the main thread, and may be run simultaneously with the main thread. The asynchronous thread does not block running of the main thread, so that the electronic device 100 can preferentially ensure wakeup of the first peripheral.

In some implementations, when waking up the second peripheral, the electronic device 100 may further wake up a plurality of peripherals in the second peripheral in parallel. This is because the second peripheral usually includes some peripherals with long wakeup duration, and the plurality of peripherals in the second peripheral are woken up in parallel, so that duration consumed for waking up the peripherals can be further reduced.

Further, the electronic device 100 may classify, based on wakeup duration of the peripherals, the peripherals that are in the second peripheral and that are woken up in parallel. For example, a device with a long wakeup time in the second peripheral is separately classified to be woken up in parallel with another peripheral in the second peripheral, so that total peripheral wakeup duration is effectively shortened.

In an implementation, the electronic device 100 may determine the first peripheral and the second peripheral according to an allowlist. The allowlist may be determined by a developer, and a plurality of peripheral types that belong to the first peripheral and/or the second peripheral may be preset in the allowlist. In this way, the electronic device 100 can classify the peripherals according to the allowlist, and quickly obtain the wakeup-required peripheral and the non-wakeup-required peripheral through classification. In addition, the developer may further modify the allowlist again later, to implement flexible classification of the non-wakeup-required peripheral and the wakeup-required peripheral in the electronic device 100, and dynamically adjust peripherals included in the non-wakeup-required peripheral and the wakeup-required peripheral.

For example, the plurality of peripheral types that belong to the first peripheral, including the clock, the UFS controller, the DPU, the GPU, the display, and the like, may be preset in the allowlist. In this way, the electronic device 100 can search for a peripheral that is included in the electronic device 100 and that is in the allowlist, determine the peripheral as the first peripheral, and determine a remaining peripheral that is not in the allowlist as the second peripheral.

For another example, the plurality of peripheral types that belong to the second peripheral, including the keyboard, the mouse, the USB flash drive, the network interface card, the camera, the USB hub, the Wi-Fi chip, the Bluetooth chip, and the like, may be preset in the allowlist. In this way, the electronic device 100 can search for a peripheral that is included in the electronic device 100 and that is in the allowlist, determine the peripheral as the second peripheral, and determine a remaining peripheral that is not in the allowlist as the first peripheral.

In an internal implementation of waking up the first peripheral and the second peripheral by the electronic device 100, a device linked list may be established and maintained inside the electronic device 100. The device linked list may record all peripherals connected to the electronic device 100. The electronic device 100 may traverse, according to the allowlist, all the peripherals recorded in the linked list, to find the first peripheral and the second peripheral that are included in the electronic device 100. When a peripheral accesses the electronic device 100, a device node corresponding to the peripheral is added to the device linked list, and the device node may store a peripheral type of the peripheral. When a peripheral is disconnected from the electronic device 100, a device node of the peripheral recorded in the device linked list disappears. In this way, the device linked list is used to search for the wakeup-required peripheral and the non-wakeup-required peripheral in the electronic device 100, so that even if the user insert or remove the peripheral, the electronic device 100 can accurately record a peripheral that is accessed to the electronic device 100 in real time, and accurately wake up different peripherals.

It may be understood that, for a part of peripherals in the second peripheral, the electronic device 100 may not need to wake up the peripheral while waking up the first peripheral. For example, for a peripheral that is not related to lighting up a screen, the electronic device 100 may wake up the peripheral according to a use requirement of the user when the user needs to use the peripheral. For example, the camera is used as an example. The electronic device 100 does not need to wake up the camera when detecting a wakeup operation of the user, but wakes up the camera when the user has a requirement for using the camera, for example, when detecting that an operation of starting a camera application by the user. In this way, a quantity of peripherals that are woken up when the electronic device 100 starts wakeup can be reduced, to accelerate device wakeup. In addition, power consumption of the part of peripherals can be reduced.

Peripherals include a peripheral that supports synchronous wakeup and a peripheral that supports asynchronous wakeup, and wakeup of the peripheral that supports the synchronous wakeup needs to depend on wakeup of another peripheral. In other words, the peripheral that supports the synchronous wakeup needs to be woken up one by one in serial. Correspondingly, the peripheral that supports the asynchronous wakeup does not need to depend on wakeup of another peripheral, and the peripheral that supports the asynchronous wakeup may be woken up in parallel. Therefore, in a process of waking up the first peripheral and the second peripheral by the electronic device 100, if there is the peripheral that supports the synchronous wakeup in the first peripheral and the second peripheral, a device that supports the synchronous wakeup needs to be woken up based on a dependency relationship of sequential wakeup of the device.

For example, if the first peripheral includes a first sub-peripheral, wakeup of the first sub-peripheral depends on wakeup of a second sub-peripheral, and the second sub-peripheral may belong to the first peripheral or the second peripheral, when the electronic device 100 wakes up the first peripheral, the following may be included: The electronic device 100 wakes up the first sub-peripheral after waking up the second sub-peripheral.

In other words, if the wakeup-required peripheral includes a peripheral that depends on wakeup of another peripheral, when the peripheral is woken up, the another peripheral on which the peripheral depends may be preferentially ensured to be woken up first, to ensure that the wakeup-required peripheral is successfully woken up.

For another example, if the first peripheral includes a third sub-peripheral, the second peripheral includes a fourth sub-peripheral, and wakeup of the fourth sub-peripheral depends on wakeup of the third sub-peripheral, when the electronic device 100 wakes up the second peripheral, the following may be included: The electronic device 100 wakes up the fourth sub-peripheral after waking up the third sub-peripheral.

In other words, if the wakeup-required peripheral and the non-wakeup-required peripheral include peripherals that depend on each other for wakeup, and the peripheral included in the non-wakeup-required peripheral depends on the peripheral included in the wakeup-required peripheral, the electronic device 100 may wake up the wakeup-dependent peripheral in the non-wakeup-required peripheral after waking up the depended peripheral in the wakeup-required peripheral. In addition, because the electronic device 100 does not need to wait for the non-wakeup-required peripheral to be woken up, even if the wakeup-required peripheral and the non-wakeup-required peripheral include the peripherals that depend on each other for wakeup, and the electronic device 100 can only wake up these peripherals that depend on each other for wakeup one by one, the electronic device 100 does not need to wait for wakeup of all devices that depend on each other to be completed, so that a wakeup dependency relationship between peripherals that support the synchronous wakeup is weakened, and a time spent by the electronic device 100 on entering the operating state is effectively shortened.

For another example, if the second peripheral includes a fifth sub-peripheral and a sixth sub-peripheral, and wakeup of the sixth sub-peripheral depends on wakeup of the fifth sub-peripheral, when waking up the second peripheral, the electronic device 100 may first wake up the fifth sub-peripheral, and then wake up the sixth sub-peripheral.

In other words, if the non-wakeup-required peripheral includes peripherals that depend on each other for wakeup, even if these peripherals that depend on each other can be woken up only one by one in serial, the electronic device 100 does not need to wait for a serial wakeup process of the peripherals. Instead, only after process scheduling of the wakeup-required peripheral is resumed, the system may be made to enter the operating state.

It may be understood that the sub-device mentioned above is only used to represent a device included in a first device or a second device, and is not used to limit a "parent-child relationship" or "subordinate relationship" between devices in terms of functions, connections, positions, or the like.

**S103:** After resuming the process scheduling of the first peripheral, the electronic device 100 controls the system to enter the operating state without waiting for resumption of the process scheduling of the second peripheral to be completed.

The first peripheral includes a device that is required for system wakeup, and the second peripheral includes a device that is not required for the system wakeup. Therefore, after waking up the first peripheral and resuming the process scheduling of the first peripheral, the electronic device 100 may control the system to enter the operating state without waiting for the second peripheral to be woken up and the process scheduling of the second peripheral to be resumed. In this way, a speed at which the electronic device 100 enters the operating state can be accelerated.

That the electronic device 100 enters the operating state may be: lighting up the screen, displaying a system account login interface, displaying a user interface present before hibernation or sleep, and the like.

In an implementation, the wakeup operation initiated by the user may be a wakeup operation performed on the peripheral in the electronic device 100. In this case, there is a high probability that the user wants to use the peripheral. Therefore, if a wakeup source on which the wakeup operation is performed is the peripheral in the electronic device 100, the first peripheral further includes the peripheral on which the wakeup operation is performed. For example, the peripheral on which the wakeup operation is performed may be the keyboard or the mouse. In this way, after detecting a wakeup operation performed by the user on a specific peripheral, the electronic device 100 may wake up the peripheral before controlling the system to enter the operating state, to ensure normal use of the peripheral by the user.

In an implementation, whether the peripheral is a peripheral that is required to be woken up in a system wakeup process may be determined based on whether the peripheral is related to lighting up the screen. In this case, the wakeup-required peripheral may include a peripheral that is related to lighting up the screen, and the non-wakeup-required peripheral may include a peripheral that is not related to lighting up the screen. The peripheral that is related to lighting up the screen is a peripheral that affects lighting up the screen. If this part of peripheral is not in the operating state, the electronic device cannot normally light up the screen. The peripheral that is not related to lighting up the screen is a peripheral that does not affect lighting up the screen. If this part of peripheral is not in the operating state, the electronic device can still normally light up the screen.

In an implementation, in addition to determining the first peripheral and the second peripheral based on whether a peripheral is the peripheral that is required to be woken up in the system wakeup process, the electronic device 100 may further determine the first peripheral and the second peripheral based on peripheral wakeup duration. For example, if wakeup duration of a peripheral is short, even if the peripheral is a peripheral that is not required in the system wakeup process, the electronic device 100 may still classify the peripheral as the first peripheral. In this case, in addition to the peripheral that is required to be woken up in the system wakeup process, the first peripheral may further include a peripheral that is not required to be woken up in the system wakeup process and whose wakeup duration is less than a threshold. In this case, the peripheral included in the second peripheral may be a peripheral that is not required to be woken up in the system wakeup process and whose wakeup duration is greater than or equal to the threshold.

In this way, even if a peripheral is not required to be woken up in the system wakeup process but consumes a short time to be woken up, the peripheral may be classified as the wakeup-required peripheral. In this way, a quantity of peripherals in the non-wakeup-required peripheral can be reduced, pressure of waking up a non-wakeup-required device can be reduced, the electronic device 100 can be prevented from consuming an excessively long time to wake up the non-wakeup-required device, and total duration consumed for waking up all peripherals by the electronic device 100 can be reduced.

In some implementations, the electronic device 100 may further adjust a wakeup ranking of each peripheral in the second peripheral based on a use frequency of the peripheral. A peripheral that is used more frequently by the user may be woken up earlier, and a peripheral that is used less frequently by the user may be woken up later. This can be ensured as much as possible that a peripheral with a high user frequency can be preferentially woken up, and even if the electronic device 100 does not wake up all the peripherals, it can be ensured as much as possible that the user normally uses the electronic device 100.

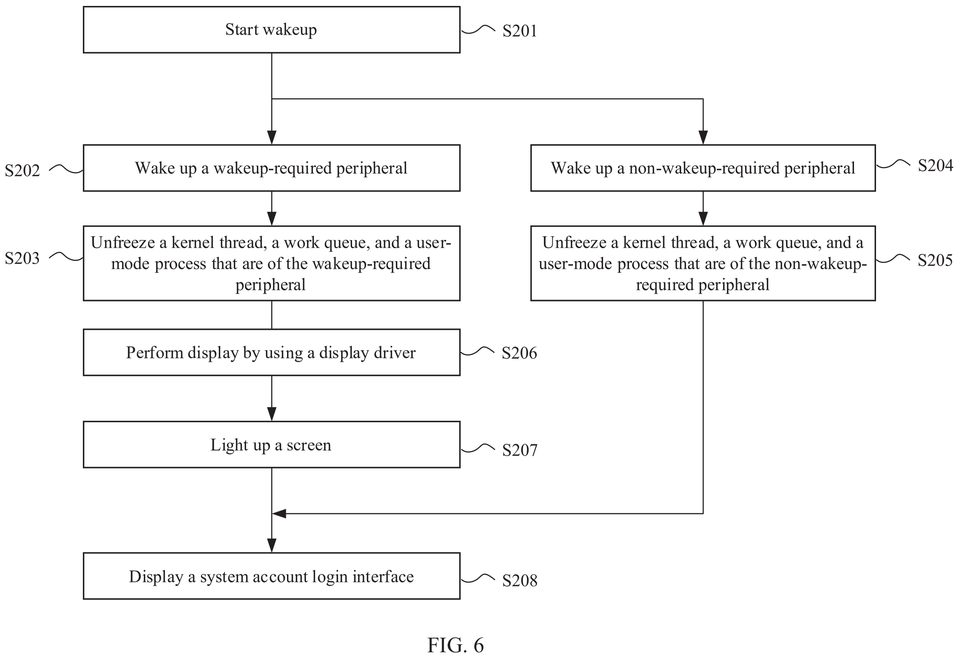

**FIG. 6** **is a schematic flowchart of a device wakeup method according to an embodiment of this application.**

As shown in FIG. 6, the device wakeup method may include the following steps.

**S201:** An electronic device 100 starts wakeup.

After detecting a wakeup operation performed by a user on a wakeup source, the electronic device 100 may start the wakeup in response to the operation. The electronic device 100 shown in FIG. 4A to FIG. 4D is used as an example. The wakeup source may be a power button, a keyboard, a notebook lid, or the like.

For example, when a system is in a sleep state, the electronic device 100 may detect a pressing operation of the user on the power button, and start the wakeup.

For a specific manner in which the electronic device 100 starts the wakeup, refer to detailed content in the foregoing step S101. Details are not described herein again.

After the electronic device 100 starts the wakeup, a peripheral included in the electronic device 100 needs to be woken up. To accelerate a peripheral wakeup speed, the peripheral in the electronic device 100 may be classified into a wakeup-required peripheral and a non-wakeup-required peripheral, and after the wakeup is started, simultaneously wake up the wakeup-required peripheral and the non-wakeup-required peripheral.

In other words, a system wakeup procedure of the electronic device 100 may include two branches: steps S202, S203, S206, and S207, and steps S204 and S205. Steps S202, S203, S206, and S207 are a main procedure for system wakeup, and are used to wake up the wakeup-required peripheral, resume process scheduling of the wakeup-required peripheral, and light up a screen. Steps S204 and S205 are a branch procedure for the system wakeup, and are used to wake up the non-wakeup-required peripheral and resume process scheduling of the non-wakeup-required peripheral.

**S202:** The electronic device 100 wakes up the wakeup-required peripheral.

The wakeup-required peripheral may include a peripheral that is required to be woken up in a system wakeup process. The electronic device 100 may start to wake up the wakeup-required peripheral after starting the wakeup.

Further, specifically, the wakeup-required peripheral may include a peripheral that is related to lighting up the screen. The peripheral that is related to lighting up the screen is a peripheral that affects lighting up the screen. If this part of peripheral is not in an operating state, the electronic device cannot normally light up the screen.

Waking up the wakeup-required peripheral may include: before the electronic device 100 enters the hibernation or sleep state, rewriting data backed up in the wakeup-required peripheral into the wakeup-required peripheral.

**S203:** The electronic device 100 unfreezes a kernel thread, a work queue, and a user-mode process that are of the wakeup-required peripheral.

After the wakeup-required peripheral is woken up, the electronic device 100 may unfreeze the kernel thread, the work queue, and the user-mode process of the wakeup-required peripheral, to resume the process scheduling of the wakeup-required peripheral, that is, resume access of the system to the wakeup-required peripheral.

**S204:** The electronic device 100 wakes up the non-wakeup-required peripheral.

The non-wakeup-required peripheral may include a peripheral that is not required to be woken up in the system wakeup process.

Further, specifically, the non-wakeup-required peripheral may include a peripheral that is not related to lighting up the screen. The peripheral that is not related to lighting up the screen is a peripheral that does not affect lighting up the screen. If this part of peripheral is not in an operating state, the electronic device can still normally light up the screen.

Waking up the non-wakeup-required peripheral may include: before the electronic device 100 enters the hibernation or sleep state, rewriting data backed up in the non-wakeup-required peripheral into the non-wakeup-required peripheral.

The electronic device 100 may start to wake up the non-wakeup-required peripheral after starting the wakeup. In other words, step S202 and step S204 may be performed simultaneously. In this way, after starting the wakeup, the electronic device 100 may simultaneously wake up the wakeup-required peripheral and the non-wakeup-required peripheral, to shorten a time spent on waking up all peripherals in the electronic device 100.

In an implementation, the electronic device 100 may wake up the wakeup-required peripheral in a main thread, and wake up the non-wakeup-required peripheral in another thread, for example, an asynchronous thread. For specific descriptions of the main thread and the asynchronous thread, refer to related content in step S102. Details are not described herein again.

**S205:** The electronic device 100 unfreezes a kernel thread, a work queue, and a user-mode process that are of the non-wakeup-required peripheral.

After the non-wakeup-required peripheral is woken up, the electronic device 100 may unfreeze the kernel thread, the work queue, and the user-mode process of the non-wakeup-required peripheral, to resume the process scheduling of the non-wakeup-required peripheral, that is, resume access of the system to the non-wakeup-required peripheral.

It should be noted that the electronic device 100 may perform step S208 after step S205 is performed.

**S206:** The electronic device 100 performs display by using a display driver.

The electronic device 100 may perform display by using the display driver after unfreezing the kernel thread, the work queue, and the user-mode process of the wakeup-required peripheral. In addition, display is performed by using the display driver without waiting for the non-wakeup-required peripheral to be woken up and the kernel thread, the work queue, and the user-mode process of the non-wakeup-required peripheral to be unfrozen. This can reduce operations that need to be performed by the electronic device 100 before step S206, and shorten a time spent in a process from starting the wakeup to performing display by using the display driver by the electronic device 100.

**S207:** The electronic device 100 lights up the screen.

The electronic device 100 may light up the screen after display of the display driver.

With reference to steps S203 and S204, it can be learned that the electronic device 100 may light up the screen without waiting for the non-wakeup-required peripheral to be woken up and the process scheduling of the non-wakeup-required peripheral to be resumed. In this way, after the electronic device starts the wakeup, only after resumption of process scheduling of a wakeup-required device is completed, the electronic device can normally light up the screen of the electronic device, thereby accelerating a screen-on speed of the electronic device 100, preventing the user from waiting for a long time during wakeup of the electronic device 100, and accelerating a wakeup speed of the electronic device 100 from a perspective of user perception.

**S208:** The electronic device 100 displays a system account login interface.

The system account login interface may be an interface that is first displayed after the electronic device 100 lights up the screen, and the user may select, through the interface, a system account to log in to the electronic device 100.

For example, the system account login interface may be a login interface 01 shown in FIG. 4C.

The electronic device 100 may display the system account login interface after the screen is turned on and after the kernel thread, the work queue, and the user-mode process of the non-wakeup-required peripheral are unfrozen.

In other words, before displaying the system account login interface, the electronic device 100 may complete wakeup of all the peripherals, and resume process scheduling of all the peripherals. This can ensure that the user normally uses the electronic device 100 after the electronic device 100 displays the system account login interface.

This is because the user may start to use the electronic device 100 after the user logs in to a specific system account through the login interface. If before the user starts to use the electronic device 100, all or most of the peripherals in the electronic device 100 are restored to an operating state present before hibernation or sleep, it can be ensured, in a timely manner, that the user normally uses the electronic device 100, thereby avoiding the following situation: When the user needs to use a specific peripheral, the peripheral has not been woken up or is still in a wakeup process, which affects user experience.

It may be understood that, in another embodiment of this application, before displaying a user interface present before hibernation or sleep, the electronic device 100 may alternatively complete wakeup of all the peripherals in the electronic device 100 and resume the process scheduling of all the peripherals. A time node at which the electronic device 100 resumes the process scheduling of all the peripherals is not limited in embodiments of this application.

For specific content that is not described in detail in steps S201 to S208, refer to related content in steps S101 to S103. Details are not described herein again.

In conclusion, according to the device wakeup method provided in embodiments of this application, after the electronic device starts wakeup, the wakeup-required peripheral and the non-wakeup-required peripheral may be simultaneously woken up, and process scheduling of these peripherals may be resumed. A system wakeup process does not need to wait for the non-wakeup-required peripheral to be woken up or the process scheduling to be resumed. Only after the wakeup-required peripheral is woken up and the process scheduling of the wakeup-required peripheral is resumed, the screen may be turned on. In this way, a device wakeup speed and the screen-on speed of the electronic device are both accelerated.

It should be understood that the steps in the foregoing method embodiments may be completed through an integrated logic circuit of hardware in the processor or instructions in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, to enable the electronic device to perform the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory. The memory is configured to store program instructions and data, and the memory is located inside or outside the processor.

The chip system may include a chip, or may include a chip and another discrete component.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

This application further provides a computer program product. The computer program product includes a computer program (which may also be referred to as code or instructions). When the computer program is run, a computer is enabled to perform any method performed by the electronic device 100 in any one of the foregoing embodiments.

This application further provides a computer-readable storage medium. The computer-readable storage medium stores a computer program (which may also be referred to as code or instructions), and the computer program includes the instructions and is a set of the instructions. When the computer program is run, a computer is enabled to perform any method performed by the electronic device 100 in any one of the foregoing embodiments.

It should be noted that the processor in embodiments of this application may be an integrated circuit chip, and has a signal processing capability. During implementation, steps in the foregoing method embodiments may be completed through an integrated logic circuit of hardware in the processor or instructions in a form of software. The processor may be a general-purpose processor, a digital signal processor (digital signal processor, DSP), an application-specific integrated circuit (AP 800plication-specific integrated circuit, ASIC), a field programmable gate array (field programmable gate array, FPGA) or another programmable logic device, a discrete gate or a transistor logic device, or a discrete hardware component, and may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the method in the foregoing method embodiments.

The apparatus, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

The implementations of this application may be combined as required to achieve different technical effects.

All or a part of the foregoing embodiments may be implemented by software, hardware, firmware, or any combination thereof. When the software is used to implement embodiments, all or a part of the embodiments may be implemented in a form of computer program product. The computer program product includes one or more computer instructions. When the computer program instructions are loaded and executed on the computer, all or a part of the procedures or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

A person of ordinary skill in the art may understand that all or a part of the procedures of the method in embodiments may be implemented by a computer program instructing related hardware. The program may be stored in a computer-readable storage medium. When the program is run, the procedures of the method in embodiments may be performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A device wakeup method, wherein the method comprises:
detecting, by an electronic device, a wakeup operation;
waking up, by the electronic device, a first peripheral, resuming process scheduling of the first peripheral, waking up a second peripheral, and resuming process scheduling of the second peripheral; and
after resuming the process scheduling of the first peripheral, controlling, by the electronic device, a system to enter an operating state.

2. The method according to claim 1, wherein the system enters the operating state without waiting for resumption of the process scheduling of the second peripheral to be completed.

3. The method according to claim 1 or 2, wherein the first peripheral comprises a peripheral that is required to be woken up for the system to enter the operating state.

4. The method according to claim 3, wherein the second peripheral comprises a peripheral that is not required to be woken up for the system to enter the operating state.

5. The method according to any one of claims 1 to 4, wherein controlling, by the electronic device, the system to enter the operating state specifically comprises:
lighting up, by the electronic device, a screen, displaying a system account login interface, or displaying a user interface present before hibernation or sleep.

6. The method according to any one of claims 1 to 5, wherein the first peripheral comprises one or more of the following: a clock, a power management unit PMU, a direct memory access DMA controller, an inter-processor communication IPC module, a system memory management unit SMMU, an input/output microcontroller unit IOMCU, a general purpose input/output GPIO controller, a high-speed serial computer expansion bus standard PCIe controller, a universal flash storage UFS controller, a graphics processing unit GPU, a data processing unit DPU, and a display.

7. The method according to any one of claims 1 to 6, wherein the second peripheral comprises one or more of the following: a universal serial bus USB controller, a universal serial bus USB hub, a keyboard, a mouse, a memory, a network interface card, a Wi-Fi chip, a Bluetooth chip, and a camera.

8. The method according to any one of claims 1 to 7, wherein the first peripheral comprises a first sub-peripheral, wakeup of the first sub-peripheral depends on wakeup of a second sub-peripheral, and the second sub-peripheral belongs to the first peripheral or the second peripheral; and waking up, by the electronic device, the first peripheral comprises:
waking up, by the electronic device, the first sub-peripheral after waking up the second sub-peripheral.

9. The method according to any one of claims 1 to 8, wherein the first peripheral comprises a third sub-peripheral, the second peripheral comprises a fourth sub-peripheral, and wakeup of the fourth sub-peripheral depends on wakeup of the third sub-peripheral; and
waking up, by the electronic device, the second peripheral specifically comprises:
waking up, by the electronic device, the fourth sub-peripheral after waking up the third sub-peripheral.

10. The method according to any one of claims 1 to 9, wherein the second peripheral comprises a fifth sub-peripheral and a sixth sub-peripheral, and wakeup of the sixth sub-peripheral depends on wakeup of the fifth sub-peripheral; and
waking up, by the electronic device, the second peripheral specifically comprises:
first waking up, by the electronic device, the fifth sub-peripheral, and then waking up the sixth sub-peripheral.

11. The method according to any one of claims 1 to 10, wherein waking up, by the electronic device, the second peripheral specifically comprises:
waking up, by the electronic device, a plurality of peripherals in the second peripheral in parallel.

12. The method according to any one of claims 1 to 11, wherein a wakeup ranking of each peripheral in the second peripheral is determined by the electronic device based on a use frequency of the peripheral by a user, wherein a peripheral that is used more frequently by the user is woken up earlier.

13. The method according to any one of claims 1 to 12, wherein
waking up, by the electronic device, the first peripheral specifically comprises:
waking up, by the electronic device, the first peripheral by using a main thread; and
waking up, by the electronic device, the second peripheral specifically comprises:
waking up, by the electronic device, the second peripheral by using an asynchronous thread.

14. The method according to any one of claims 1 to 13, wherein the first peripheral is determined by the electronic device according to an allowlist, and a plurality of peripheral types that belong to the first peripheral are preset in the allowlist.

15. The method according to any one of claims 1 to 14, wherein the electronic device is a tablet computer, a notebook computer, or a desktop computer.

16. An electronic device, comprising a memory, one or more processors, and one or more programs, wherein when the one or more processors execute the one or more programs, the electronic device is enabled to implement the method according to any one of claims 1 to 15.

17. A computer-readable storage medium, comprising a computer program, wherein when the computer program is run on an electronic device, the electronic device is enabled to perform the method according to any one of claims 1 to 15.

18. A computer program product, comprising a computer program, wherein when the computer program product runs on an electronic device, the electronic device is enabled to perform the method according to any one of claims 1 to 15.
